# EUROPEAN PATENT SPECIFICATION

(11) **EP 0 823 985 B1**
(45) Date of publication and mention of the grant of the patent: **17.07.2002**
(21) Application number: 97610032.1
(22) Date of filing: 13.08.1997
(51) Int. Cl.: A01B 73/00

(54) **A mower with working wheels and transport wheels**
Mäher mit Stütz- und Transporträdern
Faucheuse à roues de travail et de transport

(30) Priority: 15.08.1996 DK 86496
(43) Date of publication of application: 18.02.1998
(73) Proprietor: JF-FABRIKEN - J. FREUDENDAHL A/S, DK-6400 Sonderborg (DK)
(72) Inventor: Freudendahl, Jan, 6400 Sonderborg (DK); Freudendahl, Jorn, 6400 Sonderborg (DK)
(74) Representative: Indahl, Peter Jensen

(56) References cited:
- EP-A- 0 452 237
- WO-A-95/28825
- DE-A- 3 814 690
- DE-U- 8 807 054
- US-A- 3 919 831
- US-A- 4 986 064

## Description

The present invention relates to a mower which for transport in a direction transverse to its working direction is provided with transport wheels on the mower itself, which transport wheels are movable by means of a power means through a path between a high inactive position and a transport position lowered relative thereto, in which the transport wheels are positioned within the outer limits of the mower in its working position. Such a mower is for instance known from US-A-4 986 064.

There is a tendency towards making the structure of mowers bigger and bigger. It has been common for a long time to transport them transversely to their working direction, because their width in the working position exceeds the allowed maximum width for transport on a public road. However, the length of the mowers in the working position, i.e. the width in the transport position, gets closer to said maximum width or actually exceeds it.

In mowers which, like the one disclosed in the above-mentioned US-A-4 986 064, have transport wheels which from inactive positions taken up during work, for transport is taken to a transport position ahead of or behind, respectively, the mower itself, the transport wheels will in the transport position be positioned within the outer contours of the mower when it is in its working position. This means that room has to be made in some way or other for the transport wheels, so that they can take up their transport positions.

In the mower disclosed in US-A-4 986 064 the transport wheels are carried by each their carrier arm, which is hinged to the mower about a horizontal hinge axis extending transversely to the mower. The mower is constructed from two mowers placed side by side, said mowers comprising in particular a set of windrow guiding shields to cut each their windrow. The transport wheel, which is rear in the working position, is placed such that it is positioned between two sets of windrow guiding shields. The front transport wheel is placed above an opening in the safety shield over the mowing means of the mower. This transport wheel thus acts as a part of the safety shield, when it is in its inactive position.

In other embodiments of mowers problems may, however, be expected, as various members of the mower, in particular windrow guiding shields and safety shield will be in the way of the transport wheels or their carrier members when the transport wheels are brought into the transport position. This will entail a risk of various members of the mower colliding and subsequently becoming ruined.

The object of the invention is to avoid the above problems.

This object is met by a mower of the type mentioned by way of introduction, which is characterized in that members of the mower, which in the working position is positioned completely in or partially in the path of the transport wheels and/or their carrier members, may be moved from said path to transport positions and that they in these transport positions actuate actuating means, which open shut-off valve means in the power supply conduit for the power means for moving the transport wheels to the transport position. Hereby is obtained that it will not be possible to bring the transport wheels into transport position until the members which are in the way has been moved. This movement may be made manually or by means of power means like hydraulic cylinders or electric motors.

The power means for moving the transport wheels normally comprises a hydraulic cylinder.

In an embodiment said actuating means actuate each their shut-off valve in said power supply conduit, said shut-off valves in combination constituting said shut-off valve means.

In another embodiment said actuating means actuate valves or switches in a second power supply conduit which supplies power to a second actuating means for said shut-off valve means.

Mowers often comprise substantially vertical windrow guiding plates and a baffle plate positioned above said guiding plates and transverse thereto and having a downward facing outer portion to collect harvested material in a light windrow of limited width to make it possible for a tractor towing the mower during a subesequent pass of the field to leaves the windrow free. In such mowers, in which outer portions are hinged to the inner part of the baffle plate, the hinge axis may be positioned within the range of the vertical windrow guiding plates, and the outer portion may be divided into a middle portion and two side portions, the side portions being displaceable towards the middle portion for adjustment of the width of the outer portion. Thereby the outer portion will during work be placed between the windrow guiding plates, and the set width of the outer portion may determined the adjustment of these guiding plates.

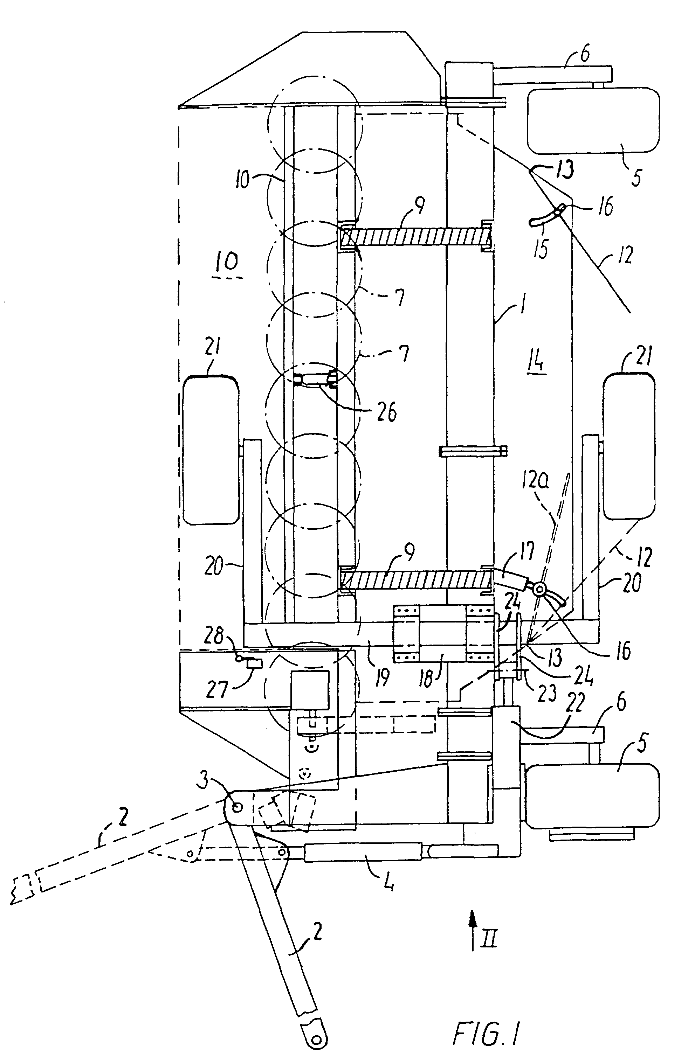

The invention will now be described in detail in the following by means of examples of embodiments with reference to the schematic drawing, in which
Fig. 1 shows a mower seen from above,
Fig. 2 the mower in Fig. 1 seen in the direction of the arrow II,
Fig. 3 a second embodiment of a mower seen from above,
Fig. 4 the mower in Fig. 3 seen in the direction of the arrow IV,
Figs 5 and 6 two different designs of the shut-off valve means.

The mower shown comprises in both embodiments an L-shaped carrier frame 1, onto which a draw bar 2 is hinged through a hinge 3, which draw bar 2 is angularly adjustable relative to the carrier frame 1 by means of a hydraulic cylinder 4 between a working position shown by a dash-dot line and a transport position shown by a solid line.

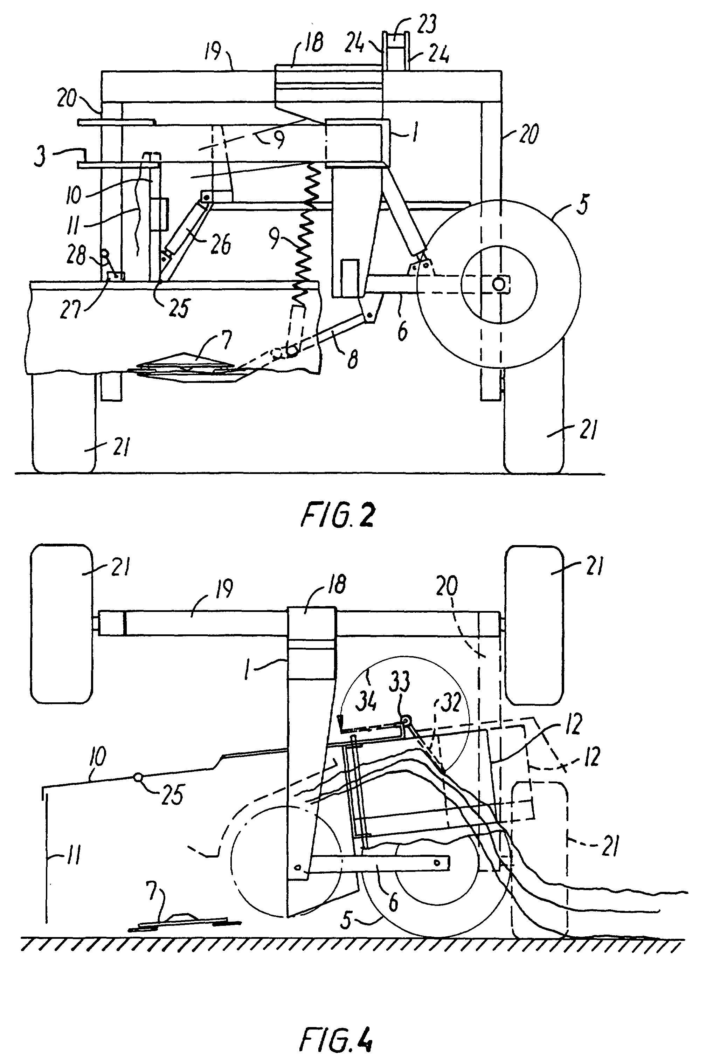

Working wheels 5 are mounted on the carrier frame 1 through each their carrier arm 6. The working aggregate of the mower comprises a number of cutter discs 7, in the case shown nine, and is suspended in the carrier frame 1 by means of linked bars 8 (Fig. 2) and springs 9. The working aggregate is at the front provided with a safety shield in the form of a cover plate 10 with a pendent shielding cloth 11.

At the back the working aggregate is provided with vertical windrow guiding plates 12 which are hinged to the working aggregate at 13. Above the windrow guiding plates 12 a baffle plate 14 with grooves 15 is provided, through which grooves a pin 16 on each windrow guiding shield 12 extends with the purpose of adjusting the angle of the windrow guiding plates 12 and subsequently the discharge opening for harvested crop, which is formed between the windrow guiding plates 12. These shields may be manually adjustable or for instance adjustable by means of a hydraulic cylinder 17.

A carrier bushing 18 is mounted on the carrier frame 1, through which bushing a pivotally journalled shaft 19 extends. From the ends of the shaft 19 carrier arms 20 for transport wheels 21 extend. The shaft 19 may be pivoted by means of a hydraulic cylinder 22, which through a hinge pin 23 engages two parallel arms 24 on the shaft 19.

The cover plate 10 is hinged to the working aggregate at 25 and may by means of a cylinder 25 be raised to the vertical position shown in Fig. 2.

The mower comprises switches or valves, one of which is shown by 27. This valve 27 is provided with an activating arm 28. The valve 27 is designed such that the activating arm 28 is actuated when the cover plate 10 is raised to the vertical position shown in Fig. 2.

For transport of the mower in a direction transverse to the working direction, the transport wheels 21 are lowered by means of the hydraulic cylinder 22. It is, however, necessary to first raise the cover plate 10 to the vertical position and swing at least one windrow guiding shield 12 to the position 12a to avoid collision between the transport wheels 21 or their carrier arms 20 and the cover plate 10 and one of the windrow guiding plates 12, respectively. By means of the valve 27 and a corresponding valve (not shown) at the windrow guiding shield 12, a valve in the supply conduit to the hydraulic cylinder 22 is opened, such that not until the cover plate 10 is raised to vertical and the windrow guiding shield 12a is swung in, will it be possible to lower the transport wheels 21.

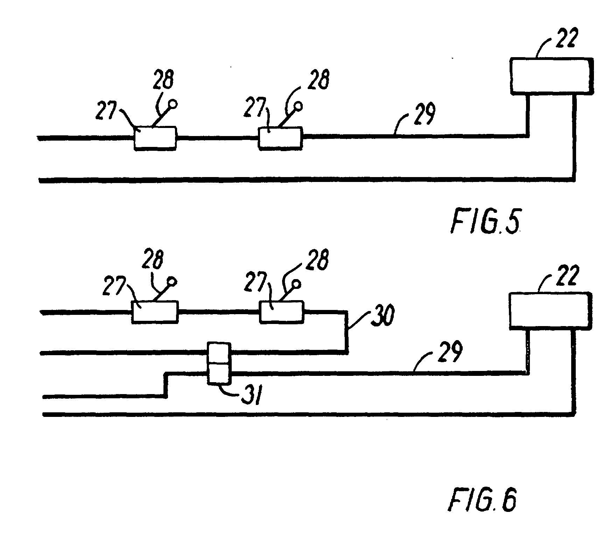

In Figs 5 and 6 two different configurations of this safety system are shown. In the configuration shown in Fig. 5, two valves 27 are inserted directly in the supply conduit 29 to the hydraulic cylinder 22 and they act collectively as a shut-off valve. In the configuration shown in Fig. 6, the valves 27 are inserted in a separate circuit 30 actuating a shut-off valve 31 on the supply conduit 29 to the hydraulic cylinder 22. The configuration shown in Fig. 6 has the advantage that the separate circuit 30 for instance may be hydraulic or electric as desired. Thereby the valves 27 may be valves, if the circuit 30 is hydraulic, or switches, if the circuit 30 is electric.

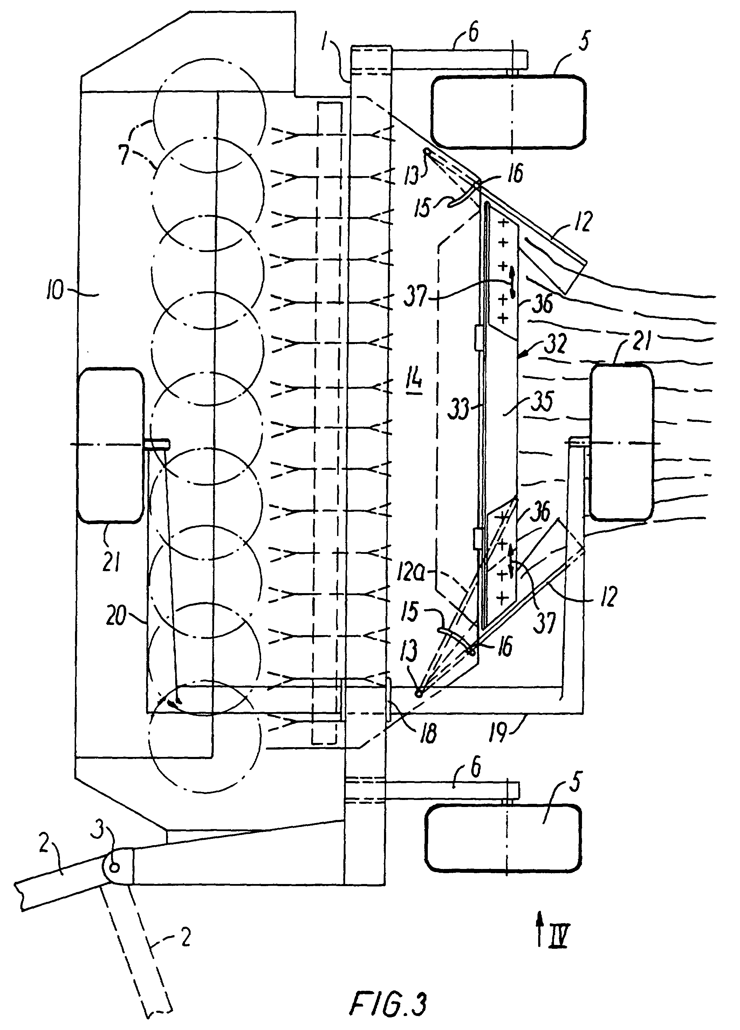

The embodiment shown in Figs 3 and 4 differs in principle not from what has been described up till now, but shows in further detail a possible embodiment of the baffle plate 14. The baffle plate normally protrudes out over the windrow guiding plates 12 and ends in a downwards directed part as shown with a dash-and-dot line in Fig. 4.

In the embodiment shown in Figs 3 and 4 the pendent part or the outer portion 32 is hinged to the stationary part of the baffle plate 14 at 33. Thereby the outer portion 32 extends in its working position (shown with a solid line in Fig. 3) between the windrow guiding plates 12. To make it possible to swing in the windrow guiding shield 12a during transport, the outer portion 32 is swung around as shown in Fig. 4 by the arrow 34 to over the baffle plate 14.

The outer portion 32 is divided in three parts, viz. a middle portion 35 and two side portions 36, which are displaceable relative to the middle portion 35 as shown by means of double arrows 37, so that the outer portion 32 may be adjusted widthwise to correspond to the setting of the windrow guiding plates 12. The outer portion 32 then acts as a stop for the windrow guiding plates 12 when being set after transport.

## Claims

1. A mower which for transport in a direction transverse to its working direction is provided with transport wheels (21) on the mower itself, which transport wheels (21) are movable by means of a power means (22) through a path between a high inactive position and a transport position lowered relative thereto, in which the transport wheels (21) are positioned within the outer limits of the mower in its working position, **characterized in that** members (10, 12) of the mower, which in the working position are positioned completely or partially in the path of the transport wheels (21) and/or their carrier means (20) may be moved from said path into transport positions, and **in that** they in these transport positions actuate actuating means (28), which open shut-off valve means (27; 31) in the power supply conduit (29) for the power means (22) for moving the transport wheels (21) to the transport position.

2. A mower according to claim 1, **characterized in that** the power means comprises a hydraulic cylinder (22) for moving at least one of the transport wheels (21).

3. A mower according to claim 1 or 2, **characterized in that** said actuating means (28) actuate each their shut-off valve (27) in said power supply conduit (29), said shut-off valves (27) in combination constituting said shut-off valve means.

4. A mower according to claim 1 or 2, **characterized in that** said actuating means (28) actuate valves (27) or switches in a second power supply conduit (30) which supplies power to a second actuating means for said shut-off valve means (31).

5. A mower according to any of the preceding claims, **characterized in** comprising substantially vertical, adjustable windrow guiding plates (12) and a baffle plate (14) positioned above said guiding plates and transverse thereto and having a downward facing outer portion (32), the outer portion (32) being hinged to the inner part of the baffle plate (14), **in that** the hinge axis (33) is positioned within the range of the vertical windrow guiding plates, and **in that** the outer portion (32) is divided into a middle portion (35) and two side portions (36), the side portions (36) being displaceable towards the middle portion (35) for adjustment of the width of the outer portion (32).

## Patentansprüche

1. Mäher, der für Transport in einer Richtung quer zu dessen Arbeitsrichtung mit Transporträdern (21) auf dem Mäher selbst versehen ist, welche Transporträder (21) mit Hilfe eines Kraftorgans (22) durch eine Bahn zwischen einer erhöhten, inaktiven Stellung und einer im Verhältnis zu dieser gesenkten Transportstellung beweglich sind, in welcher sich die Transporträder (21) innerhalb der äusseren Abgrenzungen des Mähers in dessen Arbeitsstellung befinden, **dadurch gekennzeichnet, dass** Elemente (10, 11) des Mähers, die sich in der Arbeitsstellung ganz oder teilweise in der Bahn für die Transporträder (21) und/oder deren Trägerelemente (20) befinden, aus der erwähnten Bahn in Transportstellungen bewegt werden können, und dass sie in diesen Transportstellungen Aktivierungsorgane (28) beeinflussen, die ein Öffnen eines Absperrventilmittels (27; 31) in der Kraftversorgungsleitung (29) für das Kraftorgan (22) zum Bewegen der Transporträder (21) in die Transportstellung bewirken.

2. Mäher nach Anspruch 1, **dadurch gekennzeichnet, dass** das Kraftorgan einen Hydraulikzylinder (22) zur Bewegung von zumindest einem der Transporträder (21) umfasst.

3. Mäher nach Anspruch 1 oder 2, **dadurch gekennzeichnet, dass** erwähnte Aktivierungsorgane (28) ihr zugehöriges Absperrventil (27) in der Kraftversorgungsleitung (29) betätigen, wobei erwähnte Absperrventile (27) zusammen die Absperrventilmittel darstellen.

4. Mäher nach Anspruch 1 oder 2, **dadurch gekennzeichnet, dass** erwähnte Aktivierungsorgane (28) Ventile (27) oder Schalter in einer zweiten Kraftversorgungsleitung (30) beeinflussen, welche Leitung Kraft zu einem zweiten Aktivierungsorgan für erwähnte Absperrventilmittel (31) liefert.

5. Mäher nach einem der vorhergehenden Ansprüche, **dadurch gekennzeichnet, dass** er im wesentlichen senkrechte, einstellbare Schwadenleitschirme (12) und ein über den Schwadenleitschirmen und quer zu diesen angeordnetes Leitblech (14) mit einem nach unten wendenden Aussenteil (32) umfasst, welcher Aussenteil an den Innenteil des Leitblechs (14) angelenkt ist, wobei sich die Scharnierachse (33) innerhalb des Bereichs der senkrechten Schwadenleitschirme (12) befindet, und dass der Aussenteil (32) in einen mittleren Teil (35) und zwei Seitenteile (36) eingeteilt ist, wobei die Seitenteile (36) gegen den Mittelteil (35) zwecks Justieren der Breite (32) des Aussenteils (32) versetzbar sind.

## Revendications

1. Faucheuse, qui est pour le transport dans une direction transversale à sa direction de travail pourvue de roues de transport (21) sur la faucheuse elle-même, roues de transport (21) qui peuvent se déplacer au moyen d'un moyen de force (22) par un chemin entre une position haute inactive et une position de transport baissée par rapport à la première position, où les roues de transport (21) sont arrangées dans les délimitations extérieures de la faucheuse dans sa position de travail, **caractérisée en ce que** des éléments (10, 12) de la faucheuse, qui sont dans la position de travail arrangés entièrement ou partiellement dans le chemin des roues de transport (21) et/ou de leurs moyens de support (20), peuvent être déplacés dudit chemin à des positions de transport, et **en ce qu'**ils agissent dans ces positions de transport sur des moyens d'actionnement (28) faisant ouvrir des moyens de soupape d'arrêt (27 ; 31) dans le conduit d'alimentation en énergie (29) pour le moyen de force (22) pour faire déplacer les roues de transport (21) à la position de transport.

2. Faucheuse selon la revendication 1, **caractérisée en ce que** le moyen de force comprend un cylindre hydraulique (22) pour faire déplacer au moins l'une des roues de transport (21).

3. Faucheuse selon la revendication 1 ou 2, **caractérisée en ce que** lesdits moyens d'actionnement (28) agissent chacun leur soupape d'arrêt (27) dans ledit conduit d'alimentation en énergie (29), lesdites soupapes d'arrêt (27) en combinaison formant lesdits moyens de soupape d'arrêt.

4. Faucheuse selon la revendication 1 ou 2, **caractérisée en ce que** lesdits moyens d'actionnement (28) agissent sur des soupapes (27) ou des interrupteurs dans un deuxième conduit d'alimentation en énergie (30) fournissant de l'énergie à un deuxième moyen d'actionnement pour lesdits moyens de soupapes d'arrêt (31).

5. Faucheuse selon l'une quelconque des revendications précédentes, caractérisée en comprenant des plaques guides de javelage essentiellement verticales et réglables (12) et une plaque-chicane (14) arrangée au-dessus desdites plaques guides et y transversalement et présentant une portion extérieure tournée vers le bas (32), la portion extérieure (32) étant articulée à la portion intérieure de la plaque-chicane (14), en ce que l'axe d'articulation (33) est arrangé dans l'étendue des plaque guides de javelage verticales, et en ce que la portion extérieure (32) est divisé en une partie centrale (35) et deux portions latérales (36), les portions latérales (36) pouvant se déplacer vers la partie centrale (35) pour réglage de la largeur de la portion extérieure (32).
